**Europäisches Patentamt**

**European Patent Office**

**Office européen des brevets**

(19)

(11) Veröffentlichungsnummer: **0 290 822 B1**

# EUROPÄISCHE PATENTSCHRIFT

(12)

(45) Veröffentlichungstag der Patentschrift:
24.07.91 Patentblatt 91/30

(51) Int. Cl.⁵: **B23Q 11/08**

(21) Anmeldenummer: **88106196.4**

(22) Anmeldetag: **19.04.88**

(54) **Abstreifeinrichtung.**

Die Akte enthält technische Angaben, die nach dem Eingang der Anmeldung eingereicht wurden und die nicht in dieser Patentschrift enthalten sind.

(30) Priorität: **13.05.87 PCT/EP87/00250**
**07.07.87 DE 3722450**

(43) Veröffentlichungstag der Anmeldung:
**17.11.88 Patentblatt 88/46**

(45) Bekanntmachung des Hinweises auf die Patenterteilung:
**24.07.91 Patentblatt 91/30**

(84) Benannte Vertragsstaaten:
**DE ES FR GB IT**

(56) Entgegenhaltungen:
**DD-A- 135 462**
**DE-A- 1 803 448**
**DE-A- 2 937 307**
**DE-U- 8 613 005**
**GB-A- 2 094 677**
**US-A- 3 603 651**

(73) Patentinhaber: **Gebr. Hennig GmbH**
**Dorfstrasse 41**
**W-8045 Ismaning (DE)**

(72) Erfinder: **Stöhr, Albert**
**Am Wiegenberg 8**
**W-8015 Markt Schwaben (DE)**

(74) Vertreter: **Tetzner, Volkmar, Dr.-Ing. Dr. jur.**
**Van-Gogh-Strasse 3**
**W-8000 München 71 (DE)**

EP 0 290 822 B1

## Beschreibung

Die Erfindung betrifft eine Abstreifeinrichtung für eine aus starrem Material bestehende, mit der Deckwand eines Abdeckkastens verbindbare Trägerleiste sowie einen aus elastischem Material bestehenden Abstreifer, der mit der Unterseite der Trägerleiste formschlüssig und lösbar verbunden ist.

Eine Abstreifeinrichtung der vorstehend genannten Gattung ist beispielsweise durch die GB-A-2 094 677 bekannt.

Der Erfindung liegt die Aufgabe zugrunde, eine derartige Abstreifeinrichtung so auszubilden, daß eine bessere Dämpfung und eine Verlängerung der Lebensdauer der Abstreifeinrichtung erreicht wird.

Diese Aufgabe wird erfindungsgemäß durch folgende Merkmale gelöst :

a) An der Rückseite der Abstreifeinrichtung ist ein Puffer angeordnet, der aus einem gegenüber dem Abstreifer unterschiedlichen Material besteht,

b) der Puffer ist über eine elastische Formschlußverbindung mit der Trägerleiste verbunden und unabhängig vom Abstreifer von der Trägerleiste lösbar,

c) an seiner zum Anschlag mit dem nächstkleineren Abdeckkasten kommenden rückwärtigen Stirnfläche weist der Puffer Vorsprünge auf, die vorzugsweise wellen-, rippen- oder konusförmig ausgebildet sind.

Für den Abstreifer und den Puffer werden erfindungsgemäß jeweils Materialien eingesetzt, die der speziellen Funktion dieser Elemente optimal angepaßt sind. Während es bei dem Abstreifer insbesondere auf eine hohe Abriebfestigkeit (bei begrenzter elastischer Verformbarkeit) ankommt, muß der Puffer aus einem Material bestehen, das bei Druckbeanspruchungen stark verformbar ist und hierbei eine hohe innere Verformungsarbeit aufnimmt, somit stark dämpfend wirkt. Durch die erfindungsgemäße Wahl unterschiedlicher Materialien für den Abstreifer und Puffer wird die Funktion beider Elemente verbessert und die Lebensdauer der Abstreifeinrichtung wesentlich verlängert.

Ein Ausführungsbeispiel der Erfindung ist in der Zeichnung veranschaulicht. Es zeigen

Fig. 1     einen Schnitt durch ein Ausführungsbeispiel der erfindungsgemäßen Abstreifeinrichtung,

Fig. 2     eine Aufsicht auf die Abstreifeinrichtung gemäß Fig. 1.

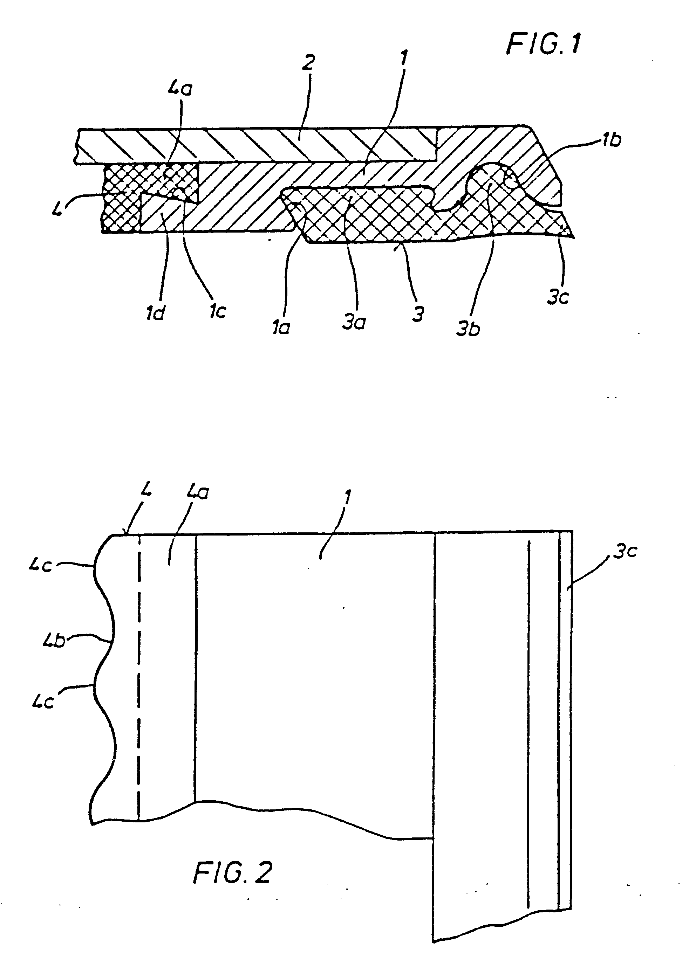

Die in den Fig. 1 und 2 dargestellte Abstreifeinrichtung für eine aus mehreren Abdeckkästen bestehende Teleskop-Stahlabdeckung enthält eine aus starrem Material bestehende Trägerleiste 1, die mit der Deckwand 2 eines Abdeckkastens in geeigneter Weise (beispielsweise über eine Schraub-, Niet- oder Schweißverbindung) verbunden ist.

Die Abstreifeinrichtung enthält weiterhin einen aus elastischem Material bestehenden Abstreifer 3, der mit der Unterseite der Trägerleiste 1 formschlüssig und lösbar verbunden ist. Zu diesem Zweck enthält die Trägerleiste 1 eine im Querschnitt etwa schwalbenschwanzförmige Ausnehmung 1a, in die der Abstreifer 3 mit einem entsprechend profilierten Vorsprung 3a eingreift.

Weiterhin ist die Trägerleiste 1 in ihrem vorderen Bereich mit einer Ausnehmung 1b versehen, die zur Aufnahme und Abstützung eines Vorsprunges 3b des Abstreifers 3 dient. Der Abstreifer 3 mündet in seinem vorderen Bereich in einer Abstreiflippe 3c.

An der Rückseite der Abstreifeinrichtung ist ein Puffer 4 angeordnet, der aus einem gegenüber dem Abstreifer 3 unterschiedlichen Material besteht und unabhängig vom Abstreifer 3 von der Trägerleiste 1 lösbar ist.

Der Puffer 4 ist auf der der Trägerleiste 1 zugewandten Seite mit einem Vorsprung 4a versehen, der formschlüssig in eine Ausnehmung 1c der Trägerleiste 1 eingreift, wobei zwischen dem Vorsprung 4a des Puffers 4 und dem die Ausnehmung 1c bildenden hinteren Teil 1d der Trägerleiste 1 ein Hintergriff besteht, durch den der Puffer 4 im Betrieb zuverlässig an der Trägerleiste 1 gehalten ist. Die Formschlußverbindung zwischen dem Puffer 4 und der Trägerleiste 1 kann jedoch im Bedarfsfalle gelöst werden, was beispielsweise durch Verschieben des Puffers 4 in Längsrichtung erfolgen kann.

An seiner rückwärtigen Stirnfläche 4b, die zum Anschlag mit dem nächstkleineren Abdeckkasten kommt, ist der Puffer 4 mit Vorsprüngen 4c versehen, die beim dargestellten Ausführungsbeispiel wellenförmig ausgebildet sind. Es besteht jedoch auch die Möglichkeit, die Vorsprünge 4c in anderer Weise zu gestalten, beispielsweise ihnen eine Rippen- oder Konusform zu geben.

## Patentansprüche

1. Abstreifeinrichtung für eine aus mehreren Abdeckkästen bestehende Teleskopabdeckung, insbesondere für eine Teleskop-Stahlabdeckung, enthaltend

a) eine aus starrem Material bestehende, mit der Deckwand (2) eines Abdeckkastens verbindbare Trägerleiste (1)

b) sowie einen aus elastischem Material bestehenden Abstreifer (3), der mit der Unterseite der Trägerleiste formschlüssig und lösbar verbunden ist,

gekennzeichnet durch folgende Merkmale :

c) an der Rückseite der Abstreifeinrichtung ist ein Puffer (4) angeordnet, der aus einem gegenüber dem Abstreifer (3) unterschiedlichen Material besteht,

d) der Puffer (4) ist über eine elastische Formschlußverbindung mit der Trägerleiste (1) verbunden und unabhängig vom Abstreifer (3) von der Trägerleiste lösbar,

e) an seiner zum Anschlag mit dem nächstkleineren Abdeckkasten kommenden rückwärtigen Stirnfläche weist der Puffer (4) Vorsprünge (4c) auf, die vorzugsweise wellen-, rippen- oder konusförmig ausgebildet sind.

## Revendications

1. Dispositif racleur destiné à une chape télescopique de protection se composant de plusieurs caissons, en particulier à une chape télescopique de protection en acier, comprenant :

a) une barre de support (1) en matériau rigide, destinée à être reliée à la cloison de couverture (2) d'un caisson

b) ainsi qu'un racloir (3) en matériau élastique, qui est relié au côté inférieur de la barre de support par complémentarité de formes et de manière amovible,

caractérisé par les particularités suivantes :

c) un tampon (4) en matériau différent de celui du racloir (3) est disposé sur le côté arrière du dispositif racleur,

d) le tampon (4) est relié à la barre de support (1) au moyen d'un assemblage élastique par complémentarité de formes et il est démontable de la barre de support indépendamment du racloir (3),

e) le tampon (4) comporte, sur la surface frontale arrière entrant en butée avec le caisson de protection de dimension immédiatement inférieure, des saillies (4c) qui ont de préférence la forme d'ondulations, de nervures ou de cônes.

## Claims

1. Scraping arrangement for a telescopic cover consisting of a plurality of cover boxes, especially for a telescopic steel cover, containing

a) a carrier strip (1) which is made from rigid material and can be connected to the top wall (2) of a cover box,

b) and a scraper (3) which is made from flexible material and is connected in a form-locking and releasable manner to the underside of the carrier strip,

characterised by the following features :

c) a buffer which is made from a different material from that of the scraper is arranged on the rear face of the scraping arrangement,

d) the buffer is connected to the carrier strip by means of a flexible form-locking connection and is releasable from the carrier strip independently of the carrier,

e) on its rear end face which comes to a stop with the next smaller cover box the buffer has projections which are preferably constructed in wave, rib or cone form.

FIG.1

FIG.2